# EUROPEAN PATENT APPLICATION

(11) **EP 4 576 339 A1**
(43) Date of publication of application: **25.06.2025**
(21) Application number: 24220925.2
(22) Date of filing: 18.12.2024
(51) Int. Cl.: H01M 10/653, H01M 50/204, H01M 50/211, H01M 50/26, H01M 50/264, H01M 10/6554, H01M 50/105, H01M 50/293

(54) **BATTERY PACK AND ELECTRIC VEHICLE**

(30) Priority: 22.12.2023 CN 202311785202; 01.04.2024 CN 202420659226 U
(71) Applicant: AESC Japan Ltd., Kanagawa, 2520012 (JP)
(72) Inventor: ZHANG, XU, Kangqiao Town, Pudong New Area Shanghai, 201315 (CN); FU, Fangkai, Kangqiao Town, Pudong New Area Shanghai, 201315 (CN); FENG, Xiaowei, Kangqiao Town, Pudong New Area Shanghai, 201315 (CN); HE, Yafei, Kangqiao Town, Pudong New Area Shanghai, 201315 (CN)
(74) Representative: Becker, Eberhard

(57) **Abstract**

The disclosure relates to the field of batteries, and specifically provides a battery pack (100, 200, 300, 400, 500, 600) and an electric vehicle. The battery pack (100, 200, 300, 400, 500, 600) has a casing (1) including a lower case base plate (13) and a beam structure (14, 15), a cell stack formed by stacking multiple pouch cells in the casing (1), an electrode tabs (231) extending from an end of the pouch battery cell (23) toward the beam structure (14, 15) along a length direction of the pouch battery cells (23), a thermally conductive structural adhesive (25)disposed between the battery cell stack (2) and the lower case base plate (13), and a foaming adhesive (29) filling a space between the electrode tabs (231) and the beam structure (14, 15).

## Description

### BACKGROUND

### Technical Field

The disclosure relates to the technical field of power batteries, and in particular to a battery pack and an electric vehicle integrated with the battery pack.

### Description of Related Art

The operating voltage of a single secondary battery is approximately 2.5V to 4.5V. In an electric vehicle or an energy storage system that require large capacity and high voltage output, it is usually necessary to connect multiple battery cells in series and/or in parallel to form a battery module, then connect the battery modules in series and/or in parallel to form a battery pack, and then the battery pack can be further used as an energy system for powering the electric vehicle or as the energy storage system. The quantity and shape of the battery modules used to build the battery pack and the quantity and shape of the battery cells used to form the battery module may be flexibly changed according to actual needs.

In the field of power batteries used in electric vehicles, in order to improve the full-charge endurance and charging speed of the electric vehicles, it is necessary to further enhance the energy density and cooling performance of the battery pack. As a solution to improve the energy density, the CTP (cell to pack) type battery pack omits the step of forming the battery cells into the battery module, and directly integrates the battery cells into the battery pack, thereby eliminating the structural parts and electrical connectors required to form the battery module, so that the space left for the battery cells are increased.

At present, common battery cells are divided into categories such as cylindrical cells, square-shell cells, and pouch cells according to the different structures. The CTP type battery pack using the square-shell cells have been widely used, but the pouch cells still face a series of problems during integration into the CTP type battery pack due to difficulty in withstanding external impacts and the poor assembly properties thereof. In the related art, it is troublesome to directly install the pouch battery cell stack in the battery pack, and it is not easy to effectively protect the battery cell stack, resulting in poor overall stability of the battery pack.

### SUMMARY

In view of the above-mentioned shortcomings of the related art, the purpose of the disclosure is to provide a battery pack easy to assemble and the overall stability of the battery pack is better.

To achieve the above-mentioned purpose and other related purposes, the disclosure provides a battery pack including the following. A casing is provided, and the casing has an installation space; a battery cell stack is provided, the battery cell stack includes a plurality of pouch battery cells in a stacked manner, and the battery cell stack is disposed in the installation space; and at least two adhesive materials are provided, the two adhesive materials are disposed in the installation space, and the adhesive materials are directly connected between the battery cell stack and the casing.

Optionally, the casing includes a lower case, the lower case includes a lower case base plate and a beam structure, the battery cell stack is disposed on the lower case base plate, and the adhesive materials are filled between the battery cell stack and the lower case base plate and between the battery cell stack and the beam structure.

Optionally, one adhesive structure is configured as a first adhesive layer and is filled and bonded between the bottom of the battery cell stack and the lower case base plate, and the other adhesive structure is configured as a second adhesive layer and is filled and bonded between an electrode tab side of the battery cell stack and the beam structure.

Optionally, the first adhesive layer is a thermally conductive structural adhesive.

Optionally, the second adhesive layer is a foaming adhesive.

Optionally, the beam structure includes an edge beam, part of the electrode tabs of each of the pouch battery cells faces the edge beam, and the second adhesive layer is disposed between the electrode tabs and the edge beam.

Optionally, the beam structure further includes one or more casing middle beams, another part of the electrode tabs of the pouch battery cell faces the casing middle beam, and the second adhesive layer is further disposed between the electrode tabs and the casing middle beam.

Optionally, the one or more the casing middle beams divide the lower case base plate into a plurality of regions, there are the plurality of battery cell stacks, and each of the plurality of battery cell stacks is disposed in one of the regions.

Optionally, a height H1 of the foaming adhesive, a height H2 of the electrode tabs, and a body height H3 of the pouch battery cell satisfy the following formula: H2≤H1≤H3.

Optionally, the second adhesive layer wraps the electrode tabs of the pouch battery cell.

Optionally, the density of the foaming adhesive is a, 0.2<a<0.3 g/cm³, the elastic modulus is b, 10<b<30 MPa, the shear strength is c, 1≤c≤3 MPa, and the tensile strength is d, 1≤d≤3 MPa.

Optionally, the battery pack further includes side plates, and the side plates are disposed on two sides of the battery cell stack along the stacking direction of the pouch battery cells in the battery cell stack.

Optionally, eash of the side plates is sandwiched between the battery cell stack and the casing.

Optionally, the battery pack further includes the following. A structural adhesive is provided. The casing further includes the following. An upper cap is provided, the upper cap is covered on the lower case to define the installation space therebetween, and the upper cap is directly bonded and fixed to the battery cell stack by the structural adhesive.

Optionally, the second adhesive layer is further filled between the electrode tabs of adjacent pouch batteries.

### <Beneficial Effects>

The technical solution provided by the disclosure can construct a pouch CTP battery pack based on pouch batteries, which has a good protective effect on the battery cell stack formed by stacking the pouch batteries, and is easy to assemble.

The second aspect of the disclosure provides an electric vehicle integrated with the battery pack provided by the first aspect of the disclosure.

### BRIEF DESCRIPTION OF THE DRAWINGS

FIG. 1 is a schematic view of the distribution of a stack of a pouch CTP battery pack provided in some embodiments of the disclosure.
FIG. 2 is a schematic view of the distribution of the stack of a modified example of the embodiment of FIG. 1.
FIG. 3 is an exploded view of the pouch CTP battery pack using the stack distribution manner corresponding to FIG. 1.
FIG. 4 is a schematic structural view (top view) of a side plate in some embodiments of the disclosure.
FIG. 5 is a schematic structural view of an outer side surface of the side plate in the embodiment of FIG. 4.
FIG. 6 is a schematic structural view of the outer surface of the side plate provided in other embodiments of the disclosure.
FIG.7 is a schematic view of a matching structure between the side plate and a long edge beam of a casing in an assembled state in the embodiment of FIG. 6.
FIG. 8 is an exploded schematic view of the pouch CTP battery pack disposed with a limiting portion in some embodiments.
FIG. 9 is a top view of the casing disposed with the limiting portion in the embodiment of FIG. 8.
FIG. 10 is a schematic view showing a relative position relationship between the bottom of the pouch battery cell and the limiting portion in the embodiment of FIG. 8 when the assembly is completed.
FIG. 11 is a schematic structural view (exploded view) of the pouch CTP battery pack in other embodiments of the disclosure.
FIG. 12 is a schematic view of a position of the limiting portion disposed at the bottom of the casing in the embodiment of FIG. 10.
FIG. 13 is a schematic view (cross-sectional view) of the relative position relationship between the pouch battery cell, the lower case base plate, and the limiting portion according to another embodiment.
FIG. 14 is a schematic view of a filling position of a foaming adhesive in some embodiments of the disclosure.
FIG. 15 is a schematic view of a filling structure of the foaming adhesive between the pouch battery cell and a short edge beam in the embodiment of FIG. 14 (a partial cross-sectional view along an XY plane).
FIG. 16 is a schematic view of a filling height of the foaming adhesive between the pouch battery cell and the short edge beam in the embodiment of FIG. 14 (a partial cross-sectional view along an XZ plane).
FIG. 17 is a schematic structural view (exploded view) of the pouch CTP battery pack disposed with a glue blocking structure in some embodiments.
FIG. 18 is a schematic structural view of the glue blocking structure after being compressed of the embodiment of FIG. 17.
FIG. 19 is a schematic structural view (a top view after removing an upper cap) of various components in the casing in the embodiment of FIG. 17.
FIG. 20 is a partially enlarged cross-sectional view of a region A in FIG. 19.

### DESCRIPTION OF THE EMBODIMENTS

The technical solutions in the embodiments of the disclosure will be described clearly and completely below together with the drawings in the embodiments of the disclosure. Certainly, the described embodiments are only part of the embodiments of the disclosure, rather than all of the embodiments. Based on the embodiments of the disclosure, all other embodiments obtained by ordinary technicians in the field without making any creative work shall fall within the scope of protection of the disclosure.

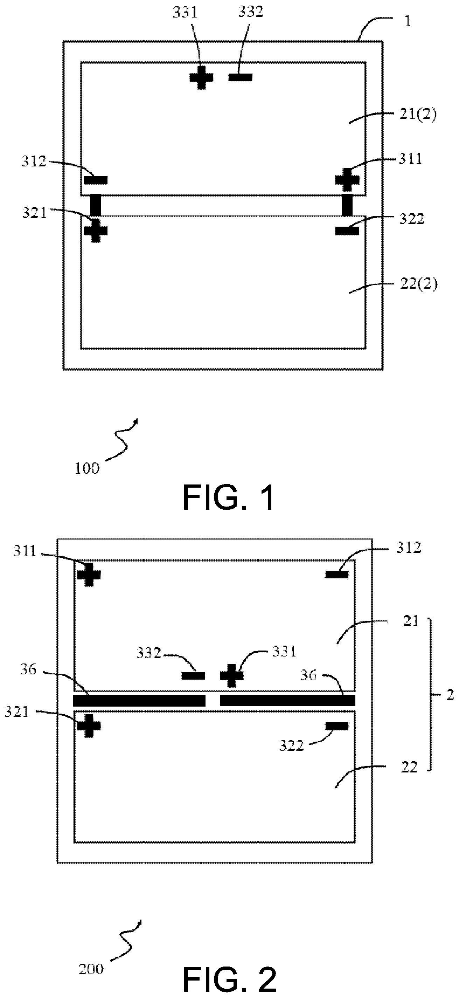

As shown in FIG. 1 to FIG. 20, according to some embodiments of the disclosure, a casing 1 has an installation space (a chamber 16), a battery cell stack 2 includes a plurality of pouch battery cells 23 in a stacked manner, the battery cell stack 2 is disposed in the installation space, at least two adhesive materials are provided, the adhesive materials are disposed in the installation space, and the adhesive materials are directly connected between the battery cell stack 2 and the casing 1 to ensure that the battery cell stack 2 is stably disposed in the installation space.

Further, the casing 1 includes a lower case 11, the lower case 11 includes a lower case base plate 13 and a beam structure, the battery cell stack 2 is disposed on the lower case base plate 13, and the adhesive materials are filled between the battery cell stack 2 and the lower case base plate 13 and between the battery cell stack 2 and the beam structure.

In the configuration, one adhesive structure is configured as a first adhesive layer and is filled and bonded between the bottom of the battery cell stack 2 and the lower case base plate 13, and the other adhesive structure is configured as a second adhesive layer and is filled and bonded between the electrode tab side of the battery cell stack 2 and the beam structure.

Specifically, the first adhesive layer is a thermally conductive structural adhesive, and the second adhesive layer is a foaming adhesive, wherein the foaming adhesive is formed by foaming, expanding and curing polyurethane and other materials.

Furthermore, the beam structure includes: an edge beam 14 is provided, a portion of an electrode tabs 231 of each pouch battery cell 23 faces the edge beam 14, and the second adhesive layer is disposed between the electrode tabs 231 and the edge beam 14. The beam structure further includes one or more casing middle beams 15, another part of the electrode tabs 231 of the pouch battery cell 23 faces the casing middle beam 15, the second adhesive layer is further disposed between the electrode tabs 231 and the casing middle beam 15, and the second adhesive layer is further filled between the electrode tabs 231 of adjacent pouch battery cells 23.

In the configuration, one or more casing middle beams 15 divide the lower case base plate 13 into a plurality of regions, and there are the plurality of battery cell stacks 2, each of the battery cell stacks 2 is disposed in one region.

Preferably, the second adhesive layer wraps the electrode tabs 231 of the pouch battery cell 23 to achieve insulation protection for the electrode tabs 231.

Furthermore, the battery pack further includes: side plates 24 are provided, the side plates 24 are disposed on two sides of the battery cell stack 2 along the stacking direction of the pouch battery cells 23 in the battery cell stack 2. Eash of the side plates 24 is sandwiched between the battery cell stack 2 and the casing 1.

The battery pack further includes: a structural adhesive is provided. The casing 1 further includes: an upper cap 12 is provided. The upper cap 12 is covered on the lower case 11 to define the installation space therebetween, and the upper cap 12 is directly bonded and fixed to the battery cell stack 2 by the structural adhesive.

### <Battery cell stack distribution>

FIG. 1 is a schematic view of the distribution of the stack of a pouch CTP battery pack 100 provided in some embodiments of the disclosure.

Referring to FIG. 1, in some embodiments of the disclosure, the pouch CTP battery pack 100 includes the square casing 1 and the square battery cell stack 2. The inner space of the casing 1 may accommodate two battery cell stacks 2 placed side by side.

The two battery cell stacks 2 are a first battery cell stack 21 and a second battery cell stack 22. The first cell stack 21 is disposed with a first output positive electrode 311 and a first output negative electrode 312 at two ends of a side adjacent to the second cell stack 22. Correspondingly, the second battery cell stack 22 is disposed with a second output positive electrode 321 and a second output negative electrode 322 at two ends of a side adjacent to the first battery cell stack 21, respectively. In the configuration, the positions of the first output positive electrode 311 and the second output negative electrode 322 correspond to each other, and the positions of the first output negative electrode 312 and the second output positive electrode 321 correspond to each other, thereby reducing the wiring length and facilitating the electrical connection in series between the two battery cell stacks 2.

In addition, the first battery cell stack 21 is further disposed with a third output positive electrode 331 and a third output negative electrode 332 adjacent to each other at an end away from the second battery cell stack 22. The first output positive electrode 311, the first output negative electrode 312, the second output positive electrode 321, and the second output negative electrode 322 are used as electrodes electrically connected in series inside the two battery cell stacks 2, and the third output positive electrode 331 and the third output negative electrode 332 are used as output electrodes of the entire pouch CTP battery pack 100. In some embodiments, the third output positive electrode 331 and the third output negative electrode 332 are electrically connected to a battery pack disconnecting unit (BDU), and the battery pack disconnecting unit is used to supply power to the entire vehicle.

The output electrodes provided by the above distribution and electrical connection manner is that, the third output positive electrode 331 and the third output negative electrode 332 are adjacent to each other. In some cases, when it is necessary for the output electrodes of the entire pouch CTP battery pack 100 to be away from each other, the first battery cell stack 21 may be rotated 180° relative to FIG. 1 and placed in the casing 1, thereby obtaining the assembly structure of a pouch CTP battery pack 200 as shown in FIG. 2.

Referring to FIG. 2, by rotating 180° and then entering the casing, the third output positive electrode 331 and the third output negative electrode 332 are located adjacent to the second battery cell stack 22, the third output positive electrode 331 and the second output negative electrode 322 are electrically connected via a transition copper busbar 36, and the third output negative electrode 332 and the second output positive electrode 321 are electrically connected via another transition copper busbar 36, thereby realizing a high-voltage electrical connection between the first battery cell stack 21 and the second battery cell stack 22. The first output positive electrode 311 and the first output negative electrode 312 may serve as output electrodes of the entire pouch CTP battery pack 200. By using the first battery cell stack 21 with the above-mentioned electrode distribution and the transition copper busbar 36 in combination, the installation angle of the first battery cell stack 21 may be flexibly adjusted to meet the requirements of different output electrode positions.

The above examples illustrate the distribution and electrical connection of the first battery cell stack 21 and the second battery cell stack 22 in some embodiments of the disclosure. It may be understood that the above description is only exemplary and should not be construed as a limitation on the distribution method and electrical connection method. In other embodiments of the disclosure, the first battery cell stack 21 and the second battery cell stack 22 may also be integrated into a single-row battery cell stack 2, and the disposition positions of the respective output electrodes of the battery cell stack 2 may also be flexibly adjusted according to actual needs.

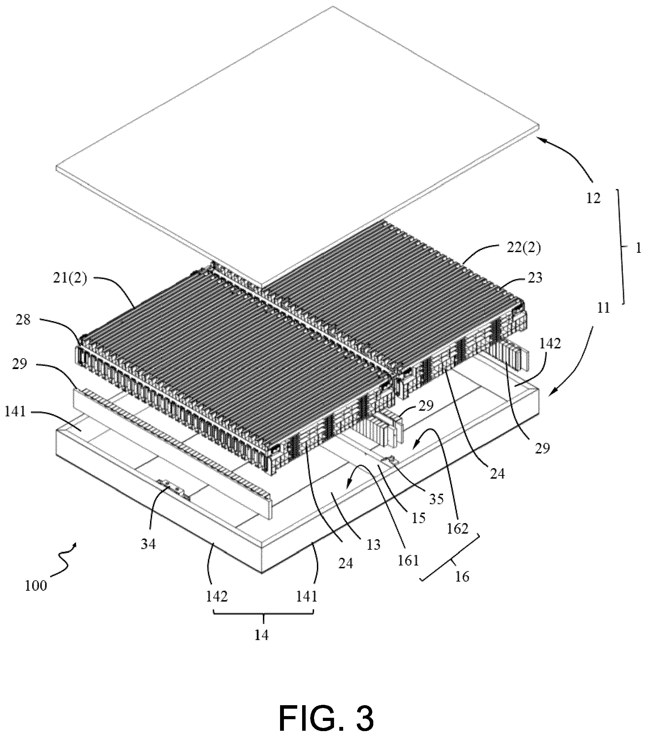

FIG. 3 is an exploded view of the pouch CTP battery pack 100 using the stack distribution manner corresponding to FIG. 1.

Referring to FIG. 3, the square casing 1 includes a lower case 11 and an upper cap 12. The lower case 11 includes a rectangular lower case base plate 13 and four edge beams 14. The four edge beams 14 are respectively vertically fixed to four sides of the rectangular lower case base plate 13, and the four edge beams 14, the lower case base plate 13, and the upper cap 12 are enclosed together to define a chamber (installation space) 16 for accommodating the battery cell stack 2. In addition to the four edge beams 14, the casing 1 further includes a casing middle beam 15 disposed at the center of the casing 1 in the length direction. The casing middle beam 15 divides the chamber 16 into a first chamber 161 and a second chamber 162, the first chamber 161 is used to accommodate the first battery cell stack 21, and the second chamber 162 is used to accommodate the second battery cell stack 22.

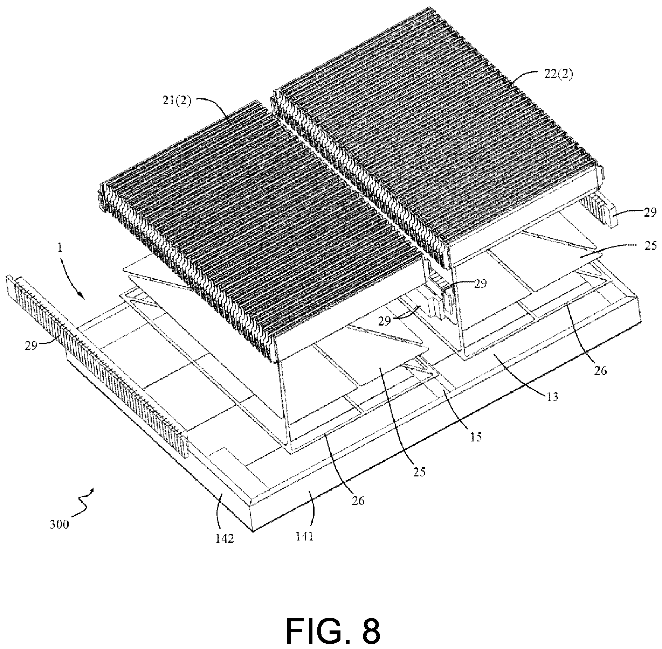

The bottom of the battery cell stack 2 is directly bonded and fixed to the lower case base plate 13 by a structural adhesive or a thermally conductive structural adhesive 25 (not shown in FIG. 3, reference may be made to FIG. 8). In order to stabilize the battery cell stack 2, enhance the overall strength and rigidity of the battery pack, and protect against thermal runaway, a foaming adhesive 29 is further filled between the battery cell stack 2 and the edge beam 14 or the casing middle beam 15.

The structural adhesive or the thermally conductive structural adhesive or an elastomer component (not shown in the drawing) is provided on the top of the battery cell stack 2 to fill the gap between the battery cell stack 2 and the upper cap 12. By using the structural adhesive, the thermally conductive structural adhesive 25, and the foaming adhesive 29 between the bottom of the battery cell stack 2 and the lower case base plate 13 and the structural adhesive, the thermally conductive structural adhesive, or the elastomer component on the top of the battery cell stack 2, a stable and buffering support may be formed for the battery cell stack 2 from all surrounding directions. In some embodiments, the elastomer component may be formed by fireproof materials such as foam and mica, and double-sided adhesive or hot-melt adhesive is provided between the elastomer component and the battery cell stack 2.

In some embodiments, a liquid cooling circuit (not shown) may be disposed in the lower case base plate 13 and the upper cap 12, and the heat dissipated by the battery cell stack 2 can be quickly transferred to the liquid cooling circuit by using the thermally conductive structural adhesive 25, thereby improving the cooling capacity to the battery cell stack 2.

The four edge beams 14 include two long edge beams 141 and two short edge beams 142, an end output electrode base 34 is disposed on the inner side of the middle portion of the short edge beam 142 adjacent to the first battery cell stack 21, and the transition copper busbar (not shown) connected to the third output positive electrode 331 and the transition copper busbar (not shown) connected to the third output negative electrode 332 are both disposed on the end output electrode base 34.

A middle adapter base 35 is disposed on the middle beam 15 of the casing. The transition copper busbar connected to the first output positive electrode 311 and the transition copper busbar connected to the second output negative electrode 322 are both disposed on the middle adapter base 35, and one end of the two transition copper busbars are also disposed on the middle adapter base 35 and are respectively electrically connected to the corresponding transition copper busbar, thereby the electrical connection between the first battery cell stack 21 and the second battery cell stack 22 is achieved.

### <Battery cell stack>

Referring to FIG. 3 still, in this embodiment, the cell stack 2 is formed by stacking and bonding the plurality of pouch cells 23, and the stacking direction is the thickness direction of the pouch cells 23, that is, the width direction of the casing 1. The length direction of the pouch battery cell 23 is parallel to the length direction of the casing 1. The top and bottom of each pouch battery cell 23 are insulated and protected by a manner of fully attaching an insulating tape (not shown in the drawing).

The pouch battery cell 23 is, for example, a battery cell using plastic or flexible materials such as aluminum-plastic film as packaging materials, and has the advantages of being light in weight, not prone to explosion, and flexible in design. The aluminum-plastic film may be, for example, an aluminum-plastic film including a nylon layer, an aluminum layer, and a PP/CPP layer.

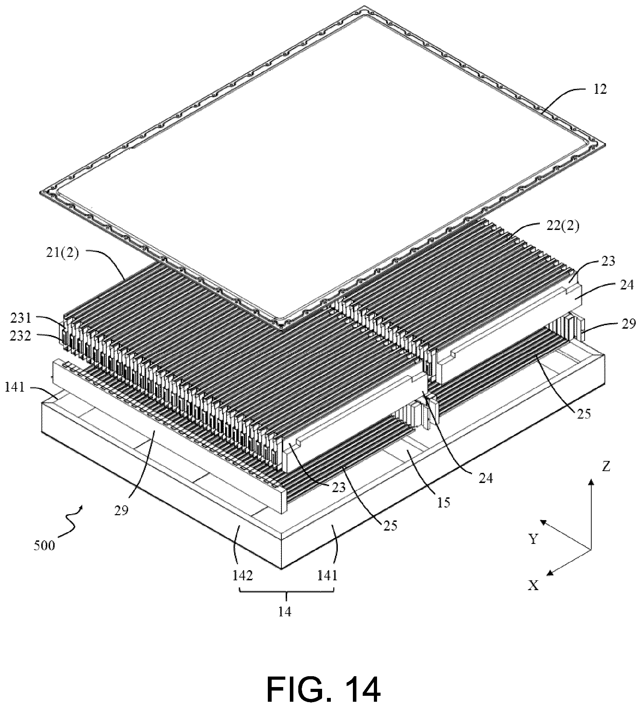

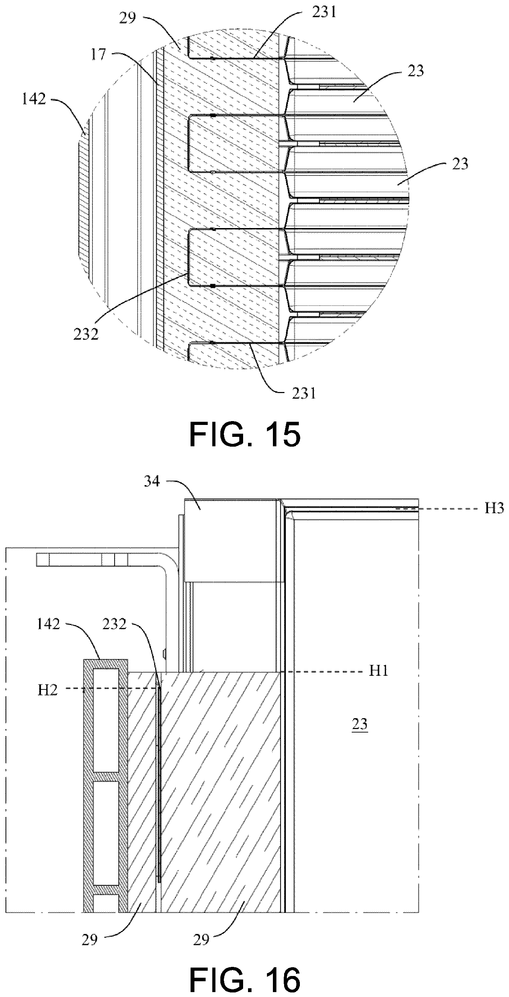

In some embodiments of the disclosure, the size range of the pouch battery cell 23 used in the pouch CTP battery pack is: length 300-700 mm, width 100-120 mm, and thickness 10-20 mm. The electrode tabs 231 (reference may be made to FIG. 14 and FIG. 15) has a thickness of 0.2 to 0.6 mm and a width of 40 to 80 mm.

### < Side plate >

How to install the battery cell stack 2 into the casing and apply a preload force to the battery cell stack 2 in the initial state is a technical problem to be solved in the assembly process of the pouch CTP battery pack 100.

In order to solve the above problem, referring to FIG. 3 still, each battery cell stack 2 of the pouch CTP battery pack 100 provided in some embodiments of the disclosure correspondingly has two side plates 24 disposed opposite to each other, the two side plates 24 are respectively disposed on the inner sides of the long edge beams 141 at two ends of the casing 1 in the width direction (that is, two ends of the battery cell stack 2 in the stacking direction), and are bonded and fixed to the main body surfaces of the two pouch battery cells 23 at the two ends of the battery cell stack 2 in the stacking direction.

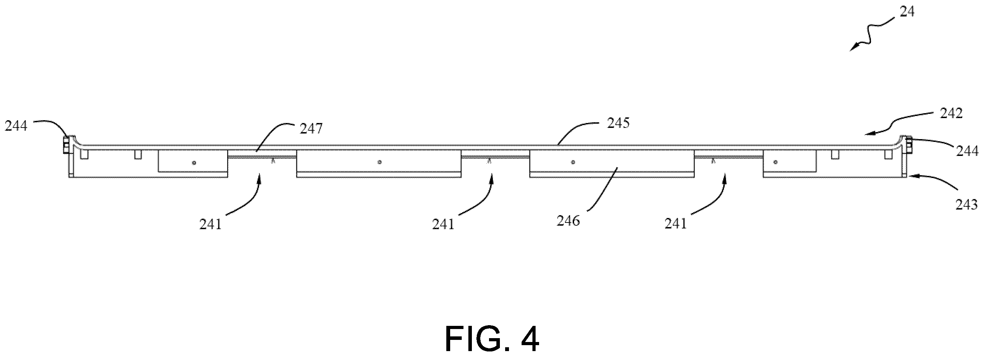

FIG. 4 is a schematic structural view (top view) of the side plate 24 in some embodiments of the disclosure. Referring to FIG. 4, the outer side surface 243 of the side plate 24 has a recess 241 matching with an external fixture. The external fixture (not shown) may clamp the side plate 24 using the recess 241 and apply the preload force to the battery cell stack 2 from the two ends of the battery cell stack 2 in the stacking direction, so that the battery cell stack 2 is squeezed to a size allowing to easily enter the casing 1, and applying the preload force can enhance the cycle performance of the battery cells. In addition, the recess 241 can also facilitate the withdrawal of the fixture after the battery cell stack 2 is placed in the casing.

In order to ensure that the preload force is more evenly distributed to various positions of the pouch battery cell 23 and avoid local stress concentration, the portion where the inner side surface 242 of the side plate 24 contacts the main body surface of the pouch battery cell 23 is formed as a flat surface 245. In other words, the area of the inner side surface 242 of the side plate 24 formed as the flat surface 245 is larger than the area of the plane portion of the main body surface of the pouch battery cell 23.

The outer edge of the inner side surface 242 of the side plate 24 protrudes to form an outer edge limiting portion 244 for limiting the relative position relationship between the side plate 24 and the pouch battery cell 23 when the flat surface 245 in the center of the inner side surface 242 abuts against the main surface of the pouch battery cell 23.

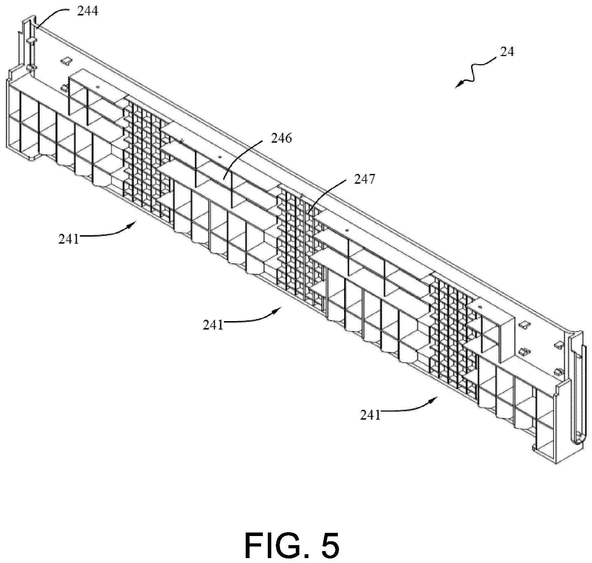

The structure of the outer side surface 243 of the side plate 24 is shown in FIG. 5. Referring to FIG. 5, a second reinforcing rib 247 is disposed at the recess 241 disposed on the outer side surface 243 of the side plate 24, and a first reinforcing rib 246 is disposed at a position where the recess 241 is not disposed. The quantity of the second reinforcing ribs 247 is greater than the first reinforcing ribs 246, and the density is also greater than the first reinforcing ribs 246, so as to improve the strength of the portion matching with the fixture. The rib height of the second reinforcing rib 247 is lower than the first reinforcing rib 246, thereby forming the recess 241.

Optionally, the wall thickness of the side plate 24 is 1.5-5 mm, the overall width is 5-25 mm, and the material of the side plate 24 may be plastic materials such as PA6, PA66, PPE, and PBT.

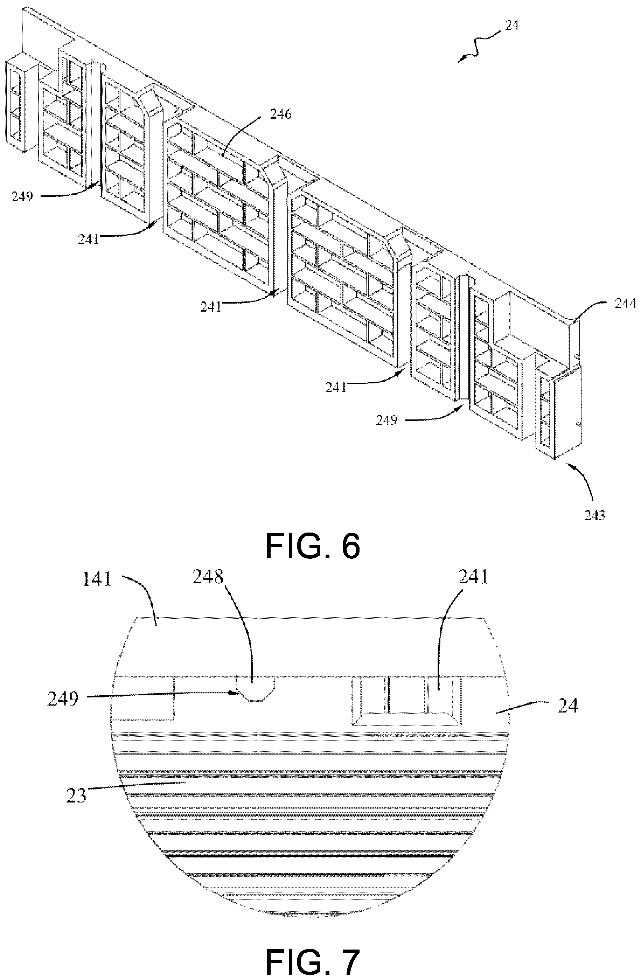

FIG. 6 is a schematic structural view of the outer side surface 243 of the side plate 24 provided in some other embodiments of the disclosure. FIG. 7 is a schematic view of the matching structure between the side plate 24 and the long edge beam 141 of the casing 1 in the assembled state. Referring to FIG. 6 and FIG. 7, the inner wall of the long edge beam 141 of the casing 1 is disposed with an positioning column 248, and the outer side surface 243 of the side plate 24 is disposed with an positioning groove 249, the shapes and sizes of the positioning column 248 and the positioning groove 249 match each other, and the positioning column 248 may be inserted into the positioning groove 249 in a matching manner, so as to limit the relative movement between the side plate 24 and the long edge beam 141 along the length direction of the pouch battery cell 23. Therefore, the positioning and installation of the battery cell stack 2 can be completed conveniently and accurately during assembly.

It should be noted that the recess 241 is only one form of matching with the external fixture in this embodiment. In other embodiments of the disclosure, according to different types of fixtures, the outer side surface 243 of the side plate may also be disposed with any other suitable form of fixture matching portion, as long as the fixture matching portion may be matched with the fixture, so that the fixture can stably clamp the battery cell stack 2.

Through the side plate 24 of the above structure, the uniform preload force may be applied to the battery cell stack 2 in the initial state, thereby effectively improving the grouping capability of the pouch battery cells 23 and facilitating the grouping of the pouch battery cells 23 and the insertion of the battery cell stack 2 into the casing.

### <Thermally conductive structural adhesive 25-limiting portion 26>

During the assembly process, it is necessary to apply the thermally conductive structural adhesive 25 between the bottom of the battery cell stack 2 and the lower case base plate 13. The thermally conductive structural adhesive 25 is generally spread evenly and fills the gap by external extrusion. However, due to reasons such as uneven extrusion pressure, the thermally conductive structural adhesive 25 in some areas is usually too thin or too thick, which affects the heat dissipation efficiency and may affect the insulation performance.

FIG. 8 is an exploded schematic view of a pouch CTP battery pack 300 disposed with a limiting portion 26 in some embodiments. Referring to FIG. 8, in order to solve the above problems, in some embodiments of the disclosure, a limiting portion 26 of a specified height is disposed by attaching the lower case base plate 13. When the casing 1 is placed horizontally, the top height of the limiting portion 26 is equal to or slightly lower than the height reached when a reasonable amount of the thermally conductive structural adhesive 25 is leveled. In this way, the staff or the automated adhesive coating system may determine whether the adhesive coating amount is appropriate based on the relative height relationship between the liquid surface height reached when the thermally conductive structural adhesive 25 is leveled and the top of the limiting portion 26. That is, when the added thermally conductive structural adhesive 25 is leveled and the liquid level is substantially flush with the top of the limiting portion 26, or the liquid level is slightly higher than the top of the limiting portion 26, the amount of the added thermally conductive structural adhesive 25 is appropriate, otherwise the amount of the added thermally conductive structural adhesive 25 needs to be adjusted. By using the limiting portion 26, the thickness of the thermally conductive structural adhesive 25 between the battery cell stack 2 and the casing 1 can be more accurately controlled within a specified thickness value within a range of 0.5 mm to 5 mm.

In some implementations of the disclosure, the limiting portion 26 is in a strip shape, namely, a limiting strip. The limiting portion 26 is preferably made of an insulating material, for example, an elastomer such as foam or silicone rubber, or plastic such as PP or PPF. In other embodiments, the limiting portion 26 may also be made of a relatively high-strength metal material such as aluminum alloy or stainless steel, and insulation may be achieved by sticking an insulating film or spraying insulating material on the surface of the metal limiting portion 26.

In some embodiments, the limiting portion 26 may be formed by splicing a plurality of limiting strips, or may be formed by integrally molding the plurality of limiting strips. In other embodiments, the limiting portion 26 may also be integrally formed with the lower case base plate 13.

On the one hand, the limiting part 26 may assist in controlling the amount of the thermally conductive structural adhesive 25 added, improve the uniformity of the thermally conductive structural adhesive 25 at the bottom of the battery cell stack 2, enhance the heat dissipation capacity of the battery cell stack 2, and improve the safety under high current use conditions; on the other hand, the limiting portion 26 may also separate the battery cell stack 2 and the lower case base plate 13 to ensure that the bottom of the battery cell stack 2 does not directly contact the lower case base plate 13 to affect the insulation.

Referring to FIG. 8, in some embodiments, the limiting portion 26 may be an independent component. After the limiting parts 26 are fixed to the lower case base plate 13, the area between the limiting parts 26 is filled with the thermally conductive structural adhesive 25 with the same height as the limiting parts 26 (or slightly higher than the height of the limiting parts 26), then, the battery cell stack 2 is placed in the casing 1. The thermally conductive structural adhesive 25 is squeezed through the battery cell stack 2, so that all the pouch battery cells 23 are evenly in contact with the limiting parts 26 and the thermally conductive structural adhesive 25. In this embodiment, the limiting portion 26 is formed by combining a plurality of foams or silicone rubbers. The surface of the lower case base plate 13 is flat, and the limiting portion 26 is adhered to the surface of the lower case base plate 13.

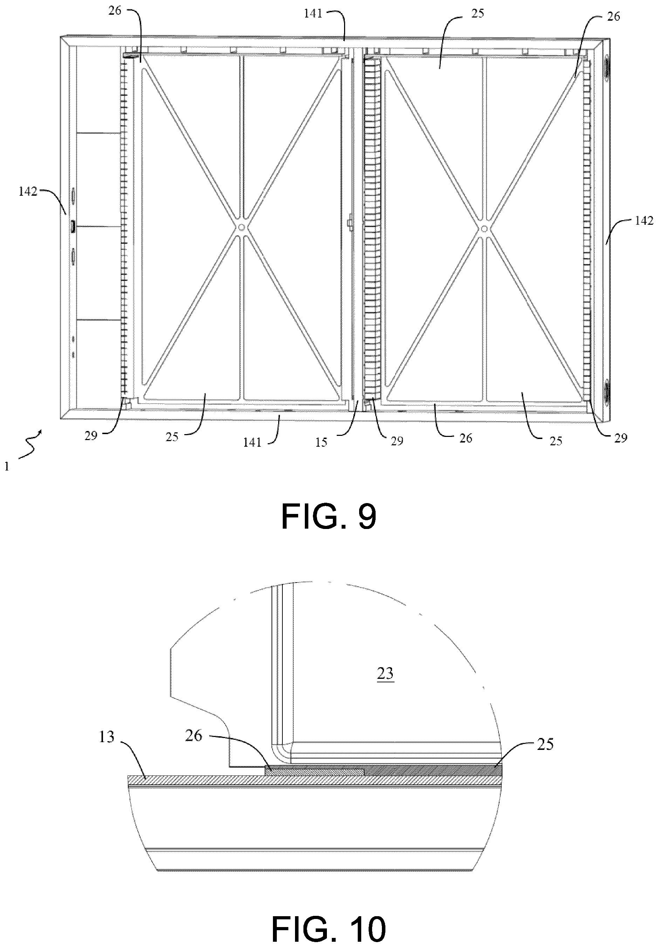

FIG. 9 is a top view of the casing 1 disposed with the limiting portion 26. Referring to FIG. 9, in the embodiment of FIG. 8, the limiting portion 26 is a separately fabricated frame structure, including a rectangular limiting portion 26 constituting an outer frame, a limiting portion 26 connecting the diagonal lines of the rectangle, and a limiting portion 26 parallel to the short edge beam 142.

The heights of the various limiting portions 26 are equal and are substantially equal to the rated adhesive coating height. FIG. 10 is a schematic view showing the relative position relationship between the bottom of the pouch battery cell 23 and the limiting portion 26 when the assembly is completed. Referring to FIG. 9 and FIG. 10, since the limiting portion 26 extends in the width direction of the casing 1, and the extension range covers the extension range of the battery cell stack 2 in the width direction of the casing 1, the limiting portion 26 disposed in this way can effectively ensure that each of the pouch battery cells 23 of the battery cell stack 2 may be pressed against the limiting portion 26.

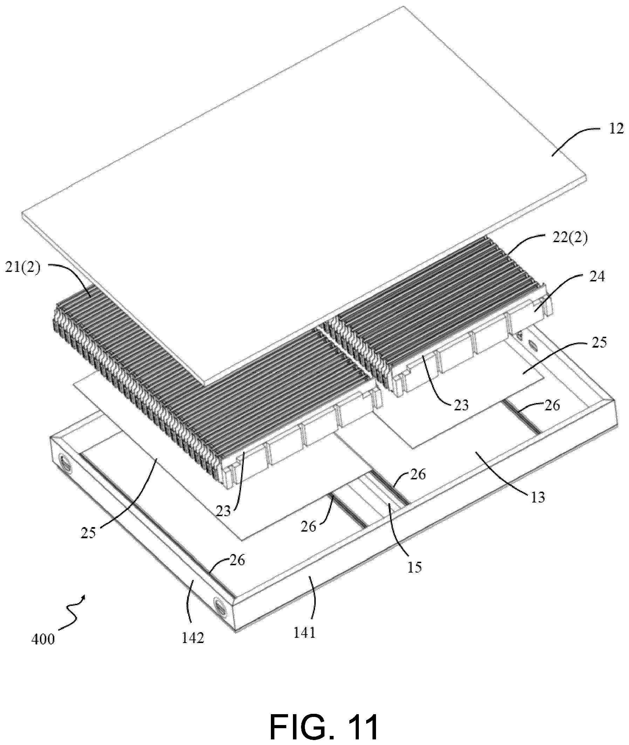

FIG. 11 is a schematic structural view (exploded view) of a pouch CTP battery pack 400 in other embodiments of the disclosure. Referring to FIG. 11, the limiting portion 26 may be integrally formed with the lower case base plate 13. Specifically, the limiting portion 26 may be formed on the surface of the lower case base plate 13 by punching ribs, alternatively, an adhesive coating groove may be punched out on the surface of the lower case base plate 13 by punching a groove, and the side wall of the adhesive coating groove is higher than the bottom of the adhesive coating groove, that is, the side wall of the adhesive coating groove is equivalent to the limiting portion 26.

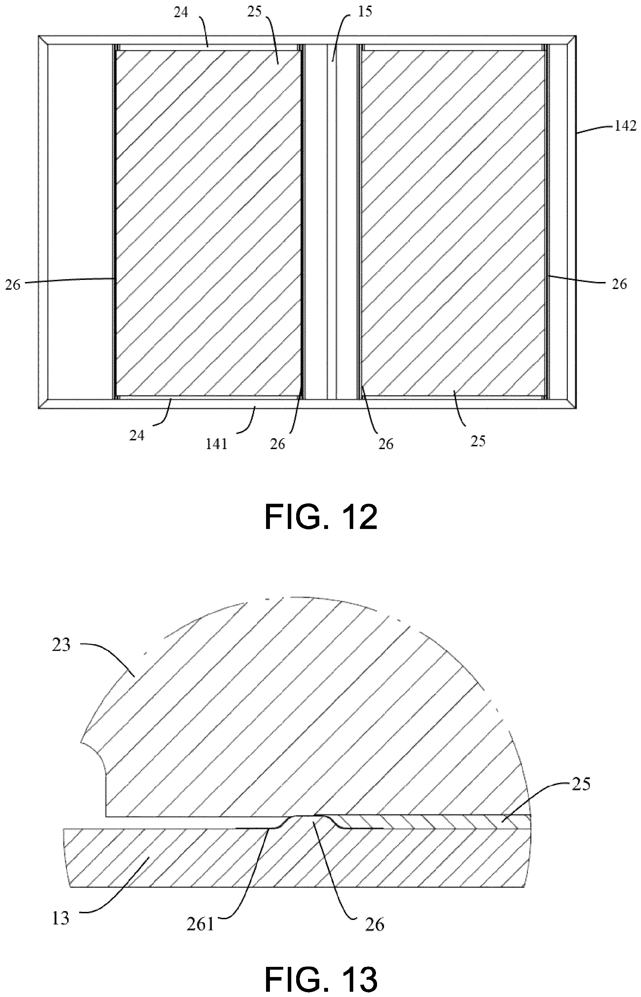

FIG. 12 is a schematic view of the position of the limiting portion 26 disposed at the bottom of the casing 1 in the embodiment of FIG. 10. FIG. 13 is a schematic view (cross-sectional view) of the relative position relationship between the pouch battery cell 23, the lower case base plate 13, and the limiting portion 26 in the embodiment of FIG. 10. Referring to FIG. 12 and FIG. 13, the limiting portion 26 is a limiting portion 26 extending along the width direction of the casing 1. The limiting portion 26 is integrally formed with the casing 1 and is made of the same metal material. In order to insulate the limiting portion 26, an insulating coating may be sprayed on the surface of the limiting portion 26 or covered with an insulating film 261. By fabricating the limiting portion 26 in an integrated manner, the step of separately positioning and installing the limiting portion 26 may be omitted, thereby shortening the process flow and improving production efficiency.

### <Foaming adhesive>

In order to improve the overall strength and rigidity of a pouch CTP battery pack 500 and ensure the structural safety performance of the pouch CTP battery pack 500, in some embodiments of the disclosure, a foaming adhesive 29 is further filled between the short edge beam 142 and the battery cell stack 2.

FIG. 14 is a schematic view of the filling position of the foaming adhesive 29 of the pouch CTP battery pack 500 in some embodiments of the disclosure. Referring to FIG. 14, the foaming adhesive 29 is filled at the two ends of the pouch battery cell 23 in the length direction, specifically between the short edge beam 142 and the electrode tab side of the battery cell stack 2, and between the casing middle beam 15 and the electrode tab side of the battery cell stack 2.

The pouched battery cells 23 are stacked in the thickness direction thereof and perpendicular to the lower case base plate 13, and the length direction of the pouched battery cell 23 is the length direction of the casing 1. The electrode tabs 231 extend from the two ends of the pouch battery cell 23 in the length direction, and the positive electrode tabs 231 and the negative electrode tabs 231 are respectively located at the two ends of the pouch battery cell 23 in the length direction. The positive electrode tabs 231 and the negative electrode tabs 231 of adjacent cells are rolled and bent and directly overlapped and welded to be fixed. In addition, in some embodiments, the battery cell stack 2 may further include a flexible printed circuit board 28 (reference may be made to FIG. 3), the body of the flexible printed circuit board 28 is arranged parallel to the electrode tabs 231, and the sampling piece (not shown) of the flexible printed circuit board 28 is welded to the electrode tabs 231.

FIG. 15 is a schematic view of the filling structure of the foaming adhesive 29 between the pouch battery cell 23 and the short edge beam 142 (a partial cross-sectional view along an XY plane in FIG. 14). FIG. 16 is a schematic view of the filling height of the foaming adhesive 29 between the pouch battery cell 23 and the short edge beam 142 (a partial cross-sectional view along an XZ plane in FIG. 14). Referring to FIG. 15 and FIG. 16, between adjacent electrode tabs 231, the electrode tabs are directly overlapped and welded. After the electrode tabs 231 are welded, the foaming adhesive 29 is poured between the electrode tab side of the pouch battery cell 23 and the short edge beam 142 and the middle beam 15 of the casing. After foaming and curing, the gap between the battery cell stack 2 and the short edge beam 142 and the gap between the battery cell stack 2 and the casing middle beam 15 are be filled with the foaming adhesive 29.

After curing, the height of the foaming adhesive 29 is higher than the height of the electrode tabs 231. In this way, the foaming adhesive 29 may completely wrap the electrode tabs 231 inside the foaming adhesive 29, and the respective electrode tabs 231 are electrically isolated by the foaming adhesive 29, which effectively prevents overlapping short circuits between the electrode tabs 231, and can improve thermal runaway protection performance, safety, and stability.

The height H1 of the foaming adhesive, the height H2 of the electrode tabs 231, and the body height H3 of the pouch battery cell 23 satisfy the following formula: H2≤H1≤H3.That is, in addition to completely immersing the electrode tabs 231, the height H1 of the foaming adhesive is preferably less than or equal to the height H3 of the pouched battery cell, that is, preferably, the height H2 of the tab ≤ the height H1 of the foaming adhesive ≤ the height H3 of the pouched battery cell. Since the foaming adhesive 29 may completely immerse the electrode tabs 231, when thermal runaway occurs, the high-temperature gas generated inside the pouch battery cell 23 is no longer released from the electrode tabs 231, but is released from the top of the electrode tabs 231 of the pouch battery cell 23 above the foaming adhesive 29, thereby effectively preventing the spread of thermal runaway.

In some embodiments of the disclosure, the distance between the tab overlap surface 232 interconnected between the electrode tabs 231 and the short edge beam 142 or the casing middle beam 15 is 3-10 mm, the inner surfaces of the short edge beam 142 and the casing middle beam 15 are disposed with an insulating strip 17, this thickness of the insulating strip 17 is 0.1-0.5 mm, and the insulating strip 17 can further ensure the electrical insulation between the electrode tabs 231 and the casing 1.

The density of the foaming adhesive is a, 0.2≤a≤0.3g/cm³, the elastic modulus is b, 10≤b≤30MPa, the shear strength is c, 1≤c≤3MPa, and the tensile strength is d, 1≤d≤3MPa. That is, the density of the foaming adhesive 29 after curing is 0.1-0.3g/cm³, the elastic modulus is 10-30MPa, the shear strength and the tensile strength are in the range of 1-3MPa, the elongation at break is ≥8%, the compression modulus is ≥30MPa, and the storage modulus is ≥20MPa. In addition, the material of the foaming adhesive 29 further has insulation properties, with a volume resistivity ≥1◊10¹⁵Ω·cm, and a flame retardant grade meeting UL94 V0.

Through the above method, on the one hand, the foaming adhesive 29 can fix the battery cell stack 2 and increase the rigidity and strength of the pouch CTP battery pack 500, and on the other hand, the electrode tabs 231 can be isolated, including the electrode tabs 231 being isolated from high-temperature gas generated during thermal runaway, and the electrical insulation between the electrode tabs 231 and between the electrode tabs 231 and the casing 1 can be achieved.

### <Glue blocking structure>

In order to prevent the foaming adhesive 29 from invading between the battery cell stack 2 and the thermally conductive structural adhesive 25 and affecting the heat dissipation capacity of the battery cell stack 2 or reducing the mechanical properties of the battery pack, in some embodiments of the disclosure, a glue blocking structure 27 is disposed at a position where the foaming adhesive 29 and the thermally conductive structural adhesive 25 may come into contact.

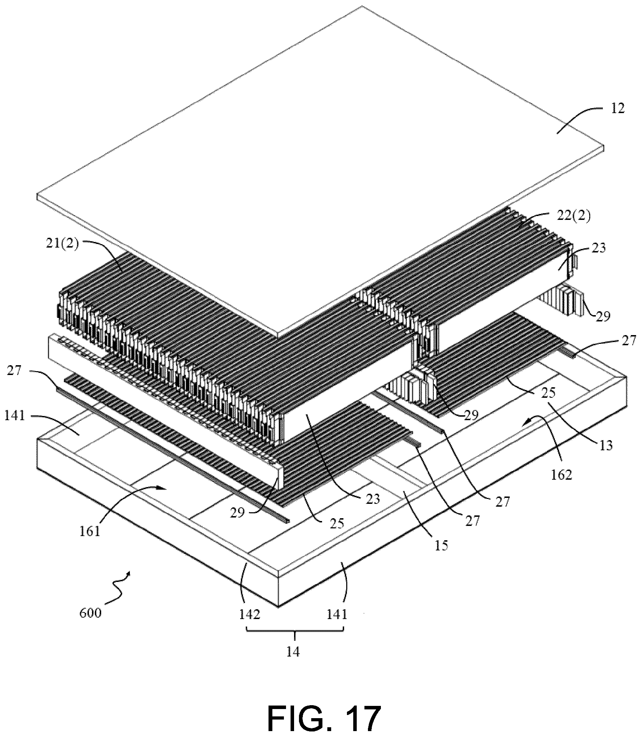

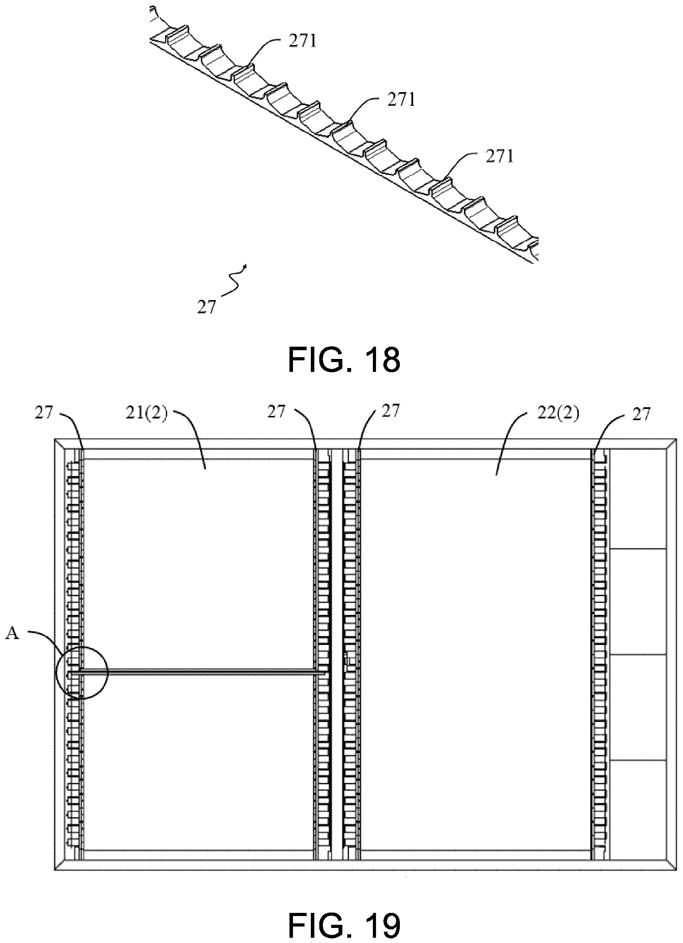

FIG. 17 is a schematic structural view (exploded view) of a pouch CTP battery pack 600 disposed with the glue blocking structure 27 in some embodiments, and FIG. 18 is a schematic structural view of the glue blocking structure 27 after being compressed.

Referring to FIG. 17 and FIG. 18, the extension direction of the glue blocking structure 27 is perpendicular to the length direction of the pouch battery cell 23, and two ends of the length direction of the glue blocking structure 27 respectively extend to abut against the inner side of the long edge beam 141.

Two glue blocking structures 27 are respectively disposed inside the first chamber 161 and the second chamber 162. The area for applying the thermally conductive structural adhesive 25 is located between the two glue blocking structures 27, and the foaming adhesive 29 is filled between the glue blocking structure 27 and the short edge beam 142, and between the glue blocking structure 27 and the casing middle beam 15.

The length of the glue blocking structure 27 is greater than or equal to the length of the battery cell stack 2 along the stacking direction, and less than the width of the casing 1. The width of the glue blocking structure 27 is 1-30 mm. The top of the glue blocking structure 27 is higher than the top of the thermally conductive structural adhesive 25, so as to limit the adhesive coating area of the thermally conductive structural adhesive 25 and prevent the thermally conductive structural adhesive 25 from overflowing.

The glue blocking structure 27 is preferably made of an insulating material with a certain elasticity, such as foam, silicone rubber, and other elastic materials, so as to effectively fill the gap, isolate the foaming adhesive 29 and the thermally conductive structural adhesive 25, and prevent the two adhesives from contacting each other.

The bottom of the glue blocking structure 27 is a flat surface and fits with the lower case base plate 13. The top may be formed as an elastic flat surface. Since there is a certain gap between the pouch battery cells 23, when the pouch battery cells 23 squeeze the top plane of the glue blocking structure 27, a plurality of teeth 271 arranged at equal intervals along the length direction may be formed on the top of the blocking rubber part 27. The tooth interval between adjacent teeth 271 is equal to the thickness of one or a group of pouch battery cells 23, and the glue blocking structure 27 may be bonded and fixed to the battery cell stack 2 by each tooth 271 correspondingly extending into the space between adjacent pouch battery cells 23.

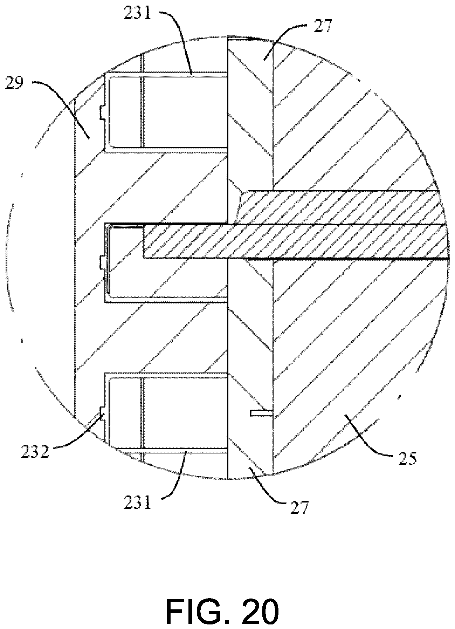

FIG. 19 is a schematic structural view (top view) of the various components in the casing 1 in the embodiment of FIG. 17. FIG. 20 is a partially enlarged cross-sectional view of a region A in FIG. 19.

Referring to FIG. 17, FIG. 19, and FIG. 20, after the battery cell stack 2 is installed in place, the pouch battery cell 23 and the glue blocking structure 27 are fully pressed together, leaving substantially no gap between the bottom of the pouch battery cell 23 and the glue blocking structure 27, thereby effectively isolating the foaming adhesive 29 and the thermally conductive structural adhesive 25 and preventing contact between the two adhesives.

In the above manner, the glue blocking structure 27 may form a close contact with the bottom of the battery cell stack 2 and fill the gaps between the pouch battery cells 23, so that the foaming adhesive 29 and the thermally conductive structural adhesive 25 are effectively isolated to prevent the foaming adhesive 29 from invading between the thermally conductive structural adhesive 25 and the battery cell stack 2, thereby ensuring the heat dissipation performance of the battery cell stack 2 and the mechanical properties of the pouch CTP battery pack 600.

In other embodiments of the disclosure, the stopper manner of the glue blocking structure 27 includes but is not limited to filling the gap between adjacent pouch battery cells 23, filling the gap between the casing 1 and the battery cell stack 2, and wrapping the side of the pouch battery cell 23, as long as the manner is helpful to isolate the thermally conductive structural adhesive 25 and the foaming adhesive 29.

### <Assembly process>

In the following description, the assembly process of the pouch CTP battery pack provided in some embodiments of the disclosure is introduced.

First, the lower case 11 of the casing 1 is provided. If the lower case 11 is integrated with the limiting portion 26 or the glue blocking structure 27, then the thermally conductive structural adhesive 25 is directly applied between the limiting portions 26 of the lower case 11; if the lower case 11 is not integrated with the limiting portion 26, then an additional limiting portion 26 or a glue blocking structure 27 is disposed, and the thermally conductive structural adhesive 25 is applied in the area between the additional limiting portions 26 or the glue blocking structures 27.

After applying a reasonable amount of the thermally conductive structural adhesive 25, an external fixture is connected to the recess 241 of the side plate 24, and two battery cell stacks 2 are placed in the casing. Before the insertion into the casing, the battery cell stack 2 is compressed to a certain size under the clamping action of the fixture, so that the entirety width of the battery cell stack 2 including the side plate 24 is less than or equal to the width of the chamber 16 inside the casing 1. After the battery cell stack 2 is inserted into the casing, the fixture may be withdrawn through the recess 241 of the side plate 24, and the battery cell stack 2 slowly rebounds until the first reinforcing rib 246 of the side plate 24 contacts the long edge beam 141 and stops rebounding.

After the installation of some electrical connectors is completed, the foaming adhesive 29 is poured between the short edge beams 142 and the battery cell stack 2 and between the casing middle beam 15 and the battery cell stack 2. After the foaming adhesive 29 is cured and formed, and other electrical connectors and the battery management system (if any) are installed, the structural adhesive is applied on the battery cell stack 2, and the upper cap 12 is closed to complete the assembly of the pouch CTP battery pack.

The above multiple implementations provided by the disclosure may be combined with each other. In some embodiments, the pouch CTP battery pack may also be directly integrated into the chassis of the electric vehicle, which is not limited in the embodiments of the disclosure.

## Claims

1. A battery pack (100, 200, 300, 400, 500, 600), comprising:
a casing (1), wherein the casing (1) has an installation space;
a battery cell stack (2), wherein the battery cell stack (2) comprises a plurality of pouch battery cells (23) in a stacked manner, and the battery cell stack (2) is disposed in the installation space; and
at least two adhesive materials (25, 29), wherein the adhesive materials (25, 29) are disposed in the installation space, and the adhesive materials (25, 29) are directly connected between the battery cell stack (2) and the casing (1).

2. The battery pack (100, 200, 300, 400, 500, 600) according to claim 1, wherein the casing (1) comprises a lower case (11), the lower case (11) comprises a lower case base plate (13) and a beam structure (14, 15), the battery cell stack (2) is disposed on the lower case base plate (13), and the adhesive materials (25, 29) are filled between the battery cell stack (2) and the lower case base plate (13) and between the battery cell stack (2) and the beam structure (14, 15).

3. The battery pack (100, 200, 300, 400, 500, 600) according to claim 2, wherein one of the adhesive materials (25, 29) is configured as a first adhesive layer (25) and is filled and bonded between a bottom of the battery cell stack (2) and the lower case base plate (13), and the other adhesive structure is configured as a second adhesive layer (29) and is filled and bonded between an electrode tab side of the battery cell stack (2) and the beam structure (14, 15).

4. The battery pack (100, 200, 300, 400, 500, 600) according to claim 3, wherein the first adhesive layer (25) is a thermally conductive structural adhesive.

5. The battery pack (100, 200, 300, 400, 500, 600) according to claim 3, wherein the second adhesive layer (29) is a foaming adhesive (29).

6. The battery pack (100, 200, 300, 400, 500, 600) according to claim 3, wherein
the beam structure (14, 15) comprises an edge beam (14), wherein part of electrode tabs (231) of each of the pouch battery cells (23) faces the edge beam (14), and the second adhesive layer (29) is disposed between the electrode tabs (231) and the edge beam (14).

7. The battery pack (100, 200, 300, 400, 500, 600) according to claim 6, wherein the beam structure (14, 15) further comprises one or more casing middle beams (15), another part of the electrode tabs (231) of the pouch battery cell (23) faces the casing middle beams (15), and the second adhesive layer (29) is further disposed between the electrode tabs (231) and the casing middle beam (15).

8. The battery pack (100, 200, 300, 400, 500, 600) according to claim 7, wherein the one or more of the casing middle beams (15) divide the lower case base plate (13) into a plurality of regions, there are a plurality of battery cell stacks (2), and each of the plurality of battery cell stacks (2) is disposed in one of the regions.

9. The battery pack (100, 200, 300, 400, 500, 600) according to claim 5, wherein a height H1 of the foaming adhesive (29), a height H2 of the electrode tabs (231), and a body height H3 of the pouch battery cell (23) satisfy the following formula: H2≤H1≤H3.

10. The battery pack (100, 200, 300, 400, 500, 600) according to claim 9, wherein the second adhesive layer (29) wraps the electrode tabs (231) of the pouch battery cell (23).

11. The battery pack (100, 200, 300, 400, 500, 600) according to claim 5, wherein a density of the foaming adhesive (29) is a, 0.2≤a≤0.3g/cm³, an elastic modulus is b, 10<b<30MPa, a shear strength is c, 1≤c≤3MPa, and a tensile strength is d, 1≤d≤3MPa.

12. The battery pack (100, 200, 300, 400, 500, 600) according to claim 1, further comprising: side plates (24), wherein the side plates (24) are disposed on two sides of the battery cell stack (2) along a stacking direction of the pouch battery cells (23) in the battery cell stack (2).

13. The battery pack (100, 200, 300, 400, 500, 600) according to claim 12, wherein each of the side plates (24) is sandwiched between the battery cell stack (2) and the casing (1).

14. The battery pack (100, 200, 300, 400, 500, 600) according to claim 2, wherein the battery pack (100, 200, 300, 400, 500, 600) further comprises: a structural adhesive, wherein the casing (1) further comprises: an upper cap (12), the upper cap (12) is covered on the lower case (11) to define the installation space therebetween, and the upper cap (12) is directly bonded and fixed to the battery cell stack (2) by the structural adhesive.

15. The battery pack (100, 200, 300, 400, 500, 600) according to any one of claims 1, 6, or 7, wherein the second adhesive layer (29) is further filled between electrode tabs (231) of adjacent pouch battery cells (23).

16. An electric vehicle, comprising the battery pack (100, 200, 300, 400, 500, 600) according to any one of claims 1 to 15.
